(19) Europäisches Patentamt
European Patent Office
Office européen des brevets

(11) **EP 1 801 125 B1**

(12) **EUROPÄISCHE PATENTSCHRIFT**

(45) Veröffentlichungstag und Bekanntmachung des Hinweises auf die Patenterteilung:
**25.03.2009   Patentblatt 2009/13**

(51) Int Cl.:
*C08C 19/02* (2006.01)     *C08K 5/09* (2006.01)
*C08K 5/14* (2006.01)     *C08L 9/02* (2006.01)

(21) Anmeldenummer: **06024868.9**

(22) Anmeldetag: **01.12.2006**

(54) **Mikrogel-enthaltende vulkanisierbare Zusammensetzung auf Basis von hydriertem Nitrilkautschuk**

Microgel-containing vulcanizable composition based on hydrogenated nitrile rubber

Composition vulcanisable à base de caoutchouc nitrile hydrogéné contenant un microgel

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.12.2005   DE 102005059625**

(43) Veröffentlichungstag der Anmeldung:
**27.06.2007   Patentblatt 2007/26**

(73) Patentinhaber: **LANXESS Deutschland GmbH**
**51369 Leverkusen (DE)**

(72) Erfinder:
• **Obrecht, Werner**
  **47447 Moers (DE)**
• **Wrana, Claus**
  **51061 Köln (DE)**

(56) Entgegenhaltungen:
**EP-A- 1 724 301**     **EP-A2- 1 078 953**
**WO-A-02/40586**     **WO-A-02/46296**
**WO-A1-01/85834**     **US-A1- 2003 065 076**

**Beschreibung**

Die vorliegende Erfindung betrifft eine Mikrogel-enthaltende vulkanisierbare Zusammensetzung auf Basis von hydriertem Nitrilkautschuk und deren Herstellung, ferner vulkanisierte Erzeugnisse, die daraus hergestellt werden und deren Verwendung insbesondere in Riemen, Walzenbelägen, Dichtungen, Schläuchen und Kabeln.

Die Herstellung vulkanisierter Gummiartikel auf der Basis hydrierter Nitrilkautschuke insbesondere für Riemen, Walzenbeläge, Dichtungen, Schläuche und Kabel ist bekannt. Werden die Artikel auf der Basis teilhydrierter Nitrilkautschuke durch Schwefelvulkanisation nach DE-A-29 139 92 bzw. EP-A-0 265 706 hergestellt, so sind die Eigenschaften derartiger Gummiartikel insbesondere bei den heute in verschiedenen Anwendungen anzutreffenden hohen Temperaturen nicht mehr ausreichend. Vulkanisate mit verbesserter Alterungsbeständigkeit erhält man auf Basis höher hydrierter Nitrilkautschuke, die mit Schwefel nach EP-A-0 112 109, mit Hilfe organischer Peroxide gemäß DE-A-34 38 414 oder auch mit anorganischen Peroxiden gemäß EP-A-0 383 127 vulkanisiert werden. Verbesserungsfähig bleiben aber die Härte sowie die Spannungswerte bei unterschiedlichen Dehnungen sowohl bei Raumtemperatur als auch bei höheren Temperaturen, beispielsweise bei 130°C. Durch Zusätze von Salzen ungesättigter Carbonsäuren gelingt bei peroxidisch vulkanisierten Nitrilkautschuken eine Verbesserung der Härte und des Modulniveaus sowohl bei Raumtemperatur als auch bei 130°C. Die Salze der ungesättigten Carbonsäuren können dabei während der Compoundherstellung "in situ" aus den Oxiden und den entsprechenden ungesättigten Carbonsäuren hergestellt werden (US-A-5,391,627). Möglich ist aber gemäß US-A-5,208,294 auch der direkte Zusatz der Salze der ungesättigten Carbonsäuren. In diesem Fall werden die Salze der ungesättigten Carbonsäuren in einem separaten Prozessschritt hergestellt bzw. käuflich erworben.

Zur weiteren Verbesserung des Eigenschaftsprofils vulkanisierter Gummiartikel auf der Basis hydrierter Nitrilkautschuke insbesondere für den Einsatz in Riemen, Walzen, Dichtungen, Schläuchen und Kabeln ist jedoch eine weitere Verbesserung der mechanischen Eigenschaften gewünscht und zwar auch bei hohen Temperaturen von 130°C oder darüber, wie sie besonders bei Automobilanwendungen zunehmend auftreten können. Dieses verbesserte Eigenschaftsprofil soll auch über einen längeren Zeitraum der Lagerung bei derartigen Temperaturen erhalten bleiben. Gleichzeitig sollen derart verbesserte Gummiartikel aber unverändert gute Werte für die Härte aufweisen.

Der Einsatz von Kautschukgelen, auch Mikrogele genannt, zur prinzipiellen Eigenschaftssteuerung von Vulkanisaten ist bekannt (z.B. EP-A-0 405 216, DE-A 42 20 563, GB-PS 1078400, DE-A-197 01 487, DE-A-197 01 489, DE-A-197 01 488, DE-A-198 34 804, DE-A-198 34 803, DE-A-198 34 802, EP-A-1 063 259, DE-A-199 39 865, DE-A-199 42 620, DE-A-199 42 614, DE-A-100 21 070, DE-A- 100 38 488, DE-A-100 39 749, DE-A-100 52 287, DE-A-100 56 311 und DE-A-100 61 174). In diesen Schriften wird die Verbesserung verschiedener Vulkanisateigenschaften durch Zusätze von Mikrogelen offenbart, jedoch nicht mit dem Fokus auf Hochtemperaturanwendungen.

Die Aufgabe der vorliegenden Erfindung bestand darin, Vulkanisate auf Basis hydrierter Nitrilkautschuke bereitzustellen, die über deutlich verbesserte mechanische Eigenschaften verfügen, insbesondere bei hohen Temperaturen wie 130°C sowie nach einer Heißluftlagerung bei 150°C.

Überraschenderweise konnte diese Aufgabe gelöst werden, indem man von einer vulkanisierbaren Zusammensetzung ausgeht, die auf einer Kombination aus einem hydrierten Nitrilkautschuk, einer ungesättigten Carbonsäure oder einem Salz davon, einem Peroxid und speziellen Mikrogelen basiert.

Gegenstand der Erfindung sind daher vulkanisierbare Zusammensetzungen enthaltend

a) ein oder mehrere hydrierte Nitrilkautschuke,
b) ein oder mehrere ungesättigte Carbonsäure(n) und/oder ein oder mehrere Salz(e) davon,
c) mindestens ein Peroxid und
d) mindestens ein Mikrogel mit einer Glastemperatur kleiner -20°C.

Diese Lösung war insofern überraschend, als Mikrogele mit einer Glastemperatur kleiner -20°C unter Verwendung von Dienen wie Butadien, Isopren u.a. hergestellt werden und daher Doppelbindungen enthalten, die gegenüber Alterungsprozessen anfällig sind. So ist nach ASTM D2000 zu erwarten, dass bei Verwendung von doppelbindungshaltigen Kautschukgelen (den sogenannten "R-Kautschuken") mit einer Verschlechterung der Alterungsbeständigkeit bei 150°C zu rechnen ist, da nach ASTM D2000 bei doppelbindungshaltigen Kautschukgelen von einer maximalen Einsatztemperatur < 100°C auszugehen ist.

Bei Einsatz der speziellen Mikrogele in den erfindungsgemäßen vulkanisierbaren Zusammensetzungen wird jedoch das Niveau mechanischer Eigenschaften der entsprechenden Vulkanisate sowohl bei einer Betriebstemperatur von 130°C als auch nach einer Heißluftlagerung bei 150°C deutlich verbessert. Diese Verbesserungen sind bei Einsatz der bisher bekannten vulkanisierbaren Zusammensetzungen hydrierter Nitrilkautschuke, die keine Mikrogele enthalten, nicht möglich. So werden in einer derartigen Zusammensetzung beispielsweise alleine durch eine Erhöhung der Zinkdiacrylat-Menge keine Eigenschaftsverbesserungen bei hohen Temperaturen erzielt. Bei Einsatz der erfindungsgemäßen Zusammensetzungen bleiben neben der Eigenschaftsverbesserung bei hohen Temperaturen auch die mechanischen Eigenschaften bei Raumtemperatur unverändert gut erhalten, und man findet bei niedriger Dichte hohe Härten.

Die erfindungsgemäßen Zusammensetzungen führen weiterhin zu Vorteilen in Bezug auf das Produktionsverfahren für die vulkanisierten Erzeugnisse. Die Herstellung der vulkanisierten Erzeugnisse erfolgt häufig über injection-moulding Verfahren. Dabei weisen die Vulkanisate der erfindungsgemäßen mikrogelhaltigen Zusammensetzungen eine geringere Klebrigkeit auf und lassen sich somit besser entformen, was zu einer geringeren Formverschmutzung im Produktionsprozess führt. Die erfindungsgemäßen mikrogelhaltigen Zusammensetzungen erlauben weiterhin eine unveränderte Anvulkanisationszeit (z.B. $t_{10}$) bei gleichzeitig kurzer Ausvulkanisationszeit ($t_{90}$ und $t_{95}$).

**Hydrierte Nitrilkautschuke:**

Unter hydrierten Nitrilkautschuken sind im Rahmen dieser Anmeldung Co- und/oder Terpolymere auf der Basis mindestens eines konjugierten Diens und mindestens eines $\alpha,\beta$-ungesättigten Nitrilmonomeren sowie gegebenenfalls weiterer copolymerisierbarer Monomeren zu verstehen, bei denen die einpolymerisierten Dieneinheiten ganz oder teilweise hydriert sind. Die Hydriergrade der einpolymerisierten Dieneinheiten liegt üblicherweise in einem Bereich von 50 bis 100%, bevorzugt in einem Bereich von 85 bis 100% und besonders bevorzugt in einem Bereich von 95 bis 100%.

Das **konjugierte Dien** kann von jeder Natur sein. Bevorzugt werden ($C_4$-$C_6$) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als $\alpha,\beta$-**ungesättigtes Nitril** kann jedes bekannte $\alpha,\beta$-ungesättigte Nitril eingesetzt werden, bevorzugt sind ($C_3$-$C_5$)-$\alpha,\beta$-ungesättigte Nitrile wie Acrylnitril, Methacrylnitril, Ethacrylnitril oder Mischungen davon. Besonders bevorzugt ist Acrylnitril.

Weitere **copolymerisierbare Monomere** sind ungesättigte Carbonsäuren sowie die Ester der ungesättigten Carbonsäuren.

Die ungesättigten Carbonsäuren sind vorzugsweise Mono- oder Dicarbonsäuren mit 3 bis 16 C-Atomen, die in $\alpha,\beta$-Position ungesättigt sind. Beispiele für die $\alpha,\beta$-ungesättigte Carbonsäuren sind: Acrylsäure, Methacrylsäure, Itaconsäure, Fumarsäure, Maleinsäure, Crotonsäure und Mischungen davon.

Ester der $\alpha,\beta$-ungesättigten Carbonsäuren mit 3 bis 16 C-Atomen umfassen vorzugsweise die Alkylester und die Alkoxyalkylester der zuvor genannten Carbonsäuren. Bevorzugte Ester der $\alpha,\beta$-ungesättigten Carbonsäuren mit 3 bis 16 C-Atomen sind Methylacrylat, Ethylacrylat, Butylacrylat, 2-Ethylhexylacrylat und Octylacrylat. Bevorzugte Alkoxyalkylester sind Methoxyethylacrylat, Ethoxyethylacrylat und Methoxyethylacrylat sowie Mischungen derselben.

Die Anteile an konjugiertem Dien und $\alpha, \beta$-ungesättigtem Nitril in den hydrierten Nitrilkautschuken können in weiten Bereichen variiert werden. Der Anteil des oder der Summe der konjugierten Diene liegt üblicherweise im Bereich von 40 bis 90 Gew. % und bevorzugt im Bereich von 50 bis 80 Gew. %, bezogen auf das Gesamtpolymer. Der Anteil des oder der Summe der $\alpha, \beta$-ungesättigten Nitrile liegt üblicherweise im Bereich von 10 bis 60 Gew. % und bevorzugt im Bereich von 20 bis 50 Gew. %, bezogen auf das Gesamtpolymer. Die zusätzlichen Monomere können in Mengen im Bereich von 0,1 bis 40 Gew. %, bevorzugt im Bereich von 1 bis 30 Gew.-%, bezogen auf das Gesamtpolymer, vorliegen. In diesem Fall werden entsprechende Anteile des oder der konjugierten Diene und/oder des oder der $\alpha, \beta$-ungesättigten Nitrile durch die Anteile der zusätzlichen Monomere ersetzt, wobei sich die Anteile aller Monomere jeweils zu 100 Gew % aufsummieren.

Die Herstellung solcher hydrierter Nitrilkautschuke, die für die erfindungsgemäßen vulkanisierbaren Zusammensetzungen geeignet sind, ist dem Fachmann hinlänglich geläufig.

Die zunächst erfolgende Herstellung der Nitrilkautschuke durch Polymerisation der vorgenannten Monomere ist in der Literatur (z.B. Houben-Weyl, Methoden der Organischen Chemie Bd. 14/1, Georg Thieme Verlag Stuttgart 1961) umfangreich beschrieben.

Die anschließende Hydrierung der vorstehend beschriebenen Nitrilkautschuke zu hydriertem Nitrilkautschuk kann in der dem Fachmann bekannten Art und Weise erfolgen. Geeignet ist beispielsweise die Umsetzung mit Wasserstoff unter Einsatz homogener Katalysatoren, wie z.B. dem als "Wilkinson"-Katalysator (($PPh_3$)$_3$RhCl) bekannten oder anderen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B. US-A-3,700,637, DE-A-25 39 132, EP-A- 134 023, DE-OS- 35 41 689, DE-OS- 35 40 918, EP-A-298 386, DE-OS- 35 29 252, DE-OS-34 33 392, US-A-4,464,515 und US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt Die selektive Hydrierung kann beispielsweise in Gegenwart eines Rhodium-haltigen Katalysators erreicht werden. Einsetzbar ist beispielsweise ein Katalysator der allgemeinen Formel

$$(R^1_m B)_l\, RhX_n$$

worin

R$^1$   gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen,

B   Phosphor, Arsen, Schwefel oder eine Sulfoxid-Gruppe S=O bedeutet,

X   Wasserstoff oder ein Anion, vorzugsweise Halogen und besonders bevorzugt Chlor oder Brom, bedeutet

l   2,3 oder 4 ist

m   2 oder 3 ist und

n   1,2 oder 3, bevorzugt 1 oder 3 ist.

Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis-(triphenylphosphin)-rhodium-hydrid der Formel $((C_6H_5)_3P)_4$RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew. %, bevorzugt im Bereich von 0,03-0,5 Gew. % und besonders bevorzugt im Bereich von 0,1-0,3 Gew. % bezogen auf das Gewicht des Polymers sind geeignet.

Üblicherweise ist es sinnvoll, den Katalysator zusammen mit einem Co-Katalysator zu verwenden, der ein Ligand der Formel R$^1_m$B ist, wobei R', m und B die zuvor für den Katalysator genannten Bedeutungen besitzen. Bevorzugt ist m gleich 3, B gleich Phosphor und die Reste R$^1$ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkylmonocycloalkyl-, Dicycloalkylmonoaryl- oder Dicyclalkylmonoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.%, bezogen auf das Gewicht des zu hydrierenden Nitrilkautschuks eingesetzt. Bevorzugt ist ferner das Gewichtsverhältnis des Rhodium-haltigen Katalysators zum Co-Katalysator im Bereich von 1:3 bis 1:55, bevorzugt im Bereich von 1:5 bis 1:45. Geeigneterweise werden 0,1 bis 33 Gewichtsteile des Co-Katalyators, bevorzugt 0,5 bis 20 Gewichtsteile, besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung solcher Hydrierungen ist dem Fachmann z.B. aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 ˚C und einem Druck im Bereich von 50 bis 150 bar für 2 bis 10 h mit Wasserstoff beaufschlagt.

Die Mooney-Viskosität der im erfindungsgemäßen Verfahren eingesetzten hydrierten Nitrilkautschuke (ML 1+4 @ 100 ˚C) liegt im Bereich von 10 bis 120 ME, bevorzugt im Bereich von 15 bis 100 ME. Die Bestimmung der Mooney-Viskosität erfolgt dabei gemäß ASTM Norm D1646.

Derartige hydrierte Nitrilkautschuke sind im Handel erhältlich. Beispiele für hydrierte Nitrilkautschuk sind voll- und teilhydrierte Nitrilkautschuke mit Acrylnitrilgehalten im Bereich 20 bis 50 Gew.% (Therban®-Palette der Lanxess Deutschland GmbH sowie Zetpol®-Palette der Nippon Zeon Corporation). Beispiele für hydrierte Butadien/Acrylnitril/Acrylat-Polymere ist die Therban®LT-Serie der Lanxess Deutschland GmbH, beispielsweise Therban®LT 2157 sowie Therban®VP KA 8882. Ein Beispiel für carboxylierte hydrierte Nitrilkautschuke ist die Therban®XT-Serie der Lanxess Deutschland GmbH. Beispiele für hydrierte Nitrilkautschuke mit geringen Mooney-Viskositäten und daher verbesserter Verarbeitbarkeit ist ein Produkt aus der Therban® AT-Serie, beispielweise Therban AT VP KA 8966.

**Ungesättigte Carbonsäuren und/oder ein oder mehrere Salze davon:**

Die erfindungsgemäße vulkanisierbare Zusammensetzung enthält eine oder mehrere ungesättigte Carbonsäuren und/oder ein oder mehrere Salze davon. Diese Komponente wird bei der späteren peroxidischen Vulkanisation teilweise in das Netzwerk mit eingebaut. Die ungesättigte Carbonsäure ist bevorzugt eine $\alpha,\beta$-ethylenisch ungesättigte Mono- oder Dicarbonsäure mit 3 bis 10 Kohlenstoffatomen wie Acrylsäure, Methacrylsäure, Zimtsäure, Crotonsäure oder Itaconsäure. Besonders bevorzugt sind Acrylsäure und Methacrylsäure. Geeignete Metallsalze sind solche von Natrium, Kalium, Magnesium, Calcium, Zink, Barium, Aluminium, Zinn, Zirkonium, Lithium. Natrium, Zink, Magnesium und Aluminium sind besonders bevorzugt. Besonders bevorzugt sind Metalldiacrylate, insbesondere Zinkdiacrylat, und Metalldimethacrylate, insbesondere Zinkdimethacrylat.

In den erfindungsgemäßen Zusammensetzungen werden, bezogen auf 100 Gew.-Teile der hydrierten Nitrilkautschuke a), 1 bis 100 Gew.-Teile, bevorzugt 5 bis 80 Gew.-Teile der ungesättigen Carbonsäuren und/oder ein oder mehrerer Salze davon, bevorzugt der $\alpha,\beta$- ethylenisch ungesättigten Mono- oder Dicarbonsäuren mit 3 bis 10 Kohlenstoffatomen oder eines oder mehrerer Salze davon verwendet. Erfindungsgemäß ist es auch möglich, das oder die Salze der $\alpha,\beta$-ungesättigten Mono- oder Dicarbonsäure(n) während der Herstellung der erfindungsgemäßen vulkanisierbaren Zusammensetzung ("Compound-Herstellung") bzw. während der anschließenden Vulkanisation "in situ" herzustellen.

**Peroxid:**

Weiterhin enthält die erfindungsgemäße vulkanisierbare Zusammensetzung mindestens ein Peroxid, das vorzugsweise aus organischen Peroxiden ausgewählt ist, insbesondere Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, 4,4-Di(t-butylperoxy)valeriansäurebutylester und/oder 1,1-Bis(t-butylperoxy)-3,3,5-trimethylcyclohexan bedeutet. Es können aber auch die weiter unten für die Mikrogelherstellung erwähnten Peroxide verwendet werden. Das oder die Peroxide werden, bezogen auf 100 Gewichtsteile des hydrierten Nitrilkautschuks, vorzugsweise in einer Gesamtmenge von 0,2 bis 8 Gew.-Teilen eingesetzt, besonders bevorzugt in einer Gesamtmenge von 0, 2 bis 5 Gew.-Teilen, insbesondere in einer Gesamtmenge von 0, 2 bis 4 Gew.-Teilen.

**Mikrogel mit einer Glastemperatur kleiner -20 ˚C:**

Die in der erfindungsgemäßen vulkanisierbaren Zusammensetzung einsetzbaren Mikrogele besitzen eine Glastemperatur kleiner - 20 ˚C.

Das in der erfindungsgemäßen vulkanisierbaren Zusammensetzung verwendete Mikrogel ist üblicherweise ein vernetztes Mikrogel auf der Basis von Homopolymeren oder statistischen Copolymeren. Bei den erfindungsgemäß verwendeten Mikrogelen handelt es sich somit um üblicherweise um vernetzte Homopolymere oder vernetzte statistische Copolymere. Die Begriffe Homopolymere und statistische Copolymere sind dem Fachmann hinlänglich bekannt und beispielsweise bei Vollmert, Polymer Chemistry, Springer 1973 erläutert.

Die Glastemperaturen der Mikrogele liegen in der Regel um 1˚C bis 10˚C höher als die Glastemperaturen der entsprechenden unvernetzten Homo- oder Copolymeren, wobei die Glastemperaturen der Mikrogele in erster Näherung proportional mit dem Vernetzungsgrad ansteigen. Bei schwach vernetzen Mikrogelen liegen die Glastemperaturen nur ca. 1˚C höher als bei den entsprechenden Homo- oder Copolymeren. Bei hochvernetzten Mikrogelen können die Glastemperaturen bis zu 10˚C höher liegen als die Glastemperaturen der entsprechenden unvernetzten Homo- oder Copolymeren. Die Glastemperaturen der zugrunde liegenden unvernetzten Copolymere können mit Hilfe der Gordon-Taylor-Beziehung oder der Fox-Flory-Beziehung berechnet werden (Vollmert, Polymer Chemistry, Springer 1973). Gute Ergebnisse werden bei diesen Berechnungen erzielt, wenn man von folgenden Glastemperaturen der entsprechenden Homopolymere ausgeht: Polybutadien: -80˚C, Polyisopren: -65˚C, Polychloropren: -39˚C, Polystyrol: 100˚C und Polyacrylnitril 100˚C.

Die in der erfindungsgemäßen vulkanisierbaren Zusammensetzung eingesetzten Mikrogele weisen zweckmäßigerweise in Toluol bei 23˚C unlösliche Anteile ("Gelgehalt") von mindestens 70 Gew.-%, bevorzugt mindestens 80 Gew.-%, und besonders bevorzugt mindestens 90 Gew.-% auf. Dieser in Toluol unlösliche Anteil wird in Toluol bei einer Temperatur von 23˚ bestimmt. Hierbei werden 250 mg des Mikrogels in 25 ml Toluol 24 Stunden unter Schütteln bei 23˚C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

Die in der erfindungsgemäßen vulkanisierbaren Zusammensetzung eingesetzten Mikrogele weisen üblicherweise in Toluol bei 23˚C einen Quellungsindex ("QI") von weniger als 80, bevorzugt von weniger als 60 und insbesondere von weniger als 40 auf. Besonders bevorzugt liegt der Quellungsindex der Mikrogele im Bereich von 1 bis 30, insbesondere im Bereich von 1 bis 20. Der Quellungsindex QI wird aus dem Gewicht des in Toluol bei 23˚C für 24 Stunden gequollenen lösungsmittelhaltigen Mikrogels (nach Zentrifugation mit 20.000 Upm) und dem Gewicht des trockenen Mikrogels gemäß folgender Formel berechnet:

$$QI = \text{Naßgewicht des Mikrogels} / \text{Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 ˚C bis zur Gewichtskonstanz getrocknet und nochmals gewogen.

In der erfindungsgemäßen vulkanisierbaren Zusammensetzung weisen die eingesetzten Mikrogele bevorzugt Glastemperaturen $T_g$ im Bereich von -100˚C bis -20˚C, besonders bevorzugt im Bereich von -80˚C bis -20˚C und insbesondere im Bereich von -80 ˚C bis -50 ˚C auf.

Die eingesetzten Mikrogele besitzen ferner üblicherweise eine Breite des Glasübergangs ("$\Delta T_g$") von größer als 5 ˚C, bevorzugt von größer als 10˚C, besonders bevorzugt von größer als 20 ˚C auf. Mikrogele, die eine solche Breite des Glasübergangs aufweisen, sind in der Regel im Gegensatz zu vollständig homogenen Mikrogelen, wie sie z.B. durch eine Strahlenvernetzung erhalten werden, nicht vollständig homogen vernetzt. Dies führt dazu, dass die Moduländerung von der Matrixphase zur dispergierten Phase nicht unmittelbar ist. Hierdurch kommt es bei plötzlicher Beanspruchung nicht zu Abreißeffekten zwischen Matrix und dispergierter Phase, wodurch die mechanischen Eigenschaften, das Quellverhalten und das Knickbiegeverhalten vorteilhaft beeinflusst werden.

Die Bestimmung der Glastemperatur (Tg) und der Breite des Glasübergangs ($\Delta T_g$) der Mikrogele erfolgt mittels Differential-Scanning-Kalorimetrie-(DSC). Für die Bestimmung von $T_g$ und $\Delta T_g$ werden zwei Abkühl/Aufheiz-Zyklen durchgeführt. $T_g$ und $\Delta T_g$ werden im zweiten Aufheiz-Zyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100˚C abgekühlt und dann mit einer Geschwindigkeit von 20K/min auf +150˚C aufgeheizt wird. Der zweite DSC-Zyklus wird durch sofortige Abkühlung der Probe begonnen, sobald eine Probentemperatur von +150˚C erreicht ist. Die Abkühlung erfolgt mit einer Geschwindigkeit von ungefähr 320 K/min. Im zweiten Aufheizzyklus wird die Probe wie im ersten Zyklus noch einmal auf +150˚C aufgeheizt. Die Aufheizgeschwindigkeit im zweiten Zyklus ist erneut 20K/min. $T_g$ und $\Delta T_g$ werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb $T_g$, die 2. Gerade an dem durch $T_g$ verlaufenden Kurvenast mit Wendepunkt und die 3. Gerade an dem Kurvenast der DSC- Kurve oberhalb $T_g$ angelegt. Auf diese Weise werden drei Geraden mit zwei Schnittpunkten erhalten. Beide Schnittpunkte sind jeweils durch eine charakteristische Temperatur gekennzeichnet. Die Glastemperatur $T_g$ erhält man als Mittelwert dieser beiden Temperaturen und die Breite des Glasübergangs $\Delta T_g$ erhält man aus der Differenz der beiden Temperaturen.

Die in der erfindungsgemäßen Zusammensetzung enthaltenen Mikrogele sind prinzipiell bekannt und können in an sich bekannter Weise hergestellt werden (siehe zum Beispiel EP-A-0 405 216, EP-A-0 854 171, DE-A 42 20 563, GB-PS 1078400, DE-A-197 01 489, DE-A-197 01 488, DE-A-198 34 804, DE-A-198 34 803, DE-A-198 34 802, EP-A-1 063 259, DE-A-199 39 865, DE-A-199 42 620, DE-A-199 42 614, DE-A-100 21 070, DE-A-100 38 488, DE-A-100 39 749, DE-A-100 52 287, DE-A-100 56 311 und DE-A-100 61 174).

In den Patentanmeldungen EP-A 405 216, DE-A-42 20 563 sowie in GB-PS 1078400 wird die Verwendung von CR-, BR- und NBR-Mikrogelen in Mischungen mit doppelbindungshaltigen Kautschuken beschrieben. In DE-A-197 01 489 wird die Verwendung von nachträglich modifizierten Mikrogelen in Mischungen mit doppelbindungshaltigen Kautschuken wie NR, SBR und BR beschrieben.

Die Mikrogele, die in den erfindungsgemäßen Zusammensetzungen eingesetzt werden können, werden üblicherweise durch Vernetzung folgender Kautschuke erhalten:

| | |
|---|---|
| BR: | Polybutadien, |
| IR: | Polyisopren, |
| SBR: | statistische Styrol-Butadien-Copolymerisate mit Styrolgehalten von 1-60, vorzugsweise 5-50 Gew. %, |
| X-SBR: | carboxylierte Styrol-Butadien-Copolymerisate |
| FKM: | Fluorkautschuk, |
| ABR: | Butadien/Acrylsäure-$C_{1-4}$-Alkylestercopolymere, |
| ACM: | Acrylatkautschuk, |
| NBR: | Nitrilkautschuke, d.h. Butadien-Acrylnitril-Co- oder Terpolymere mit Acrylnitrilgehalten von 5-60 Gew. %, vorzugsweise 10-50 Gew. %, |
| X-NBR: | carboxylierte Nitrilkautschuke |
| CR: | Polychloropren |
| IIR: | Isobutylen/Isopren-Copolymerisate mit Isoprengehalten von 0,5-10 Gew.%, |
| BIIR: | bromierte Isobutylen/Isopren-Copolymerisate mit Bromgehalten von 0,1-10 Gew. %, |
| CIIR: | chlorierte Isobutylen/Isopren-Copolymerisate mit Chlorgehalten von 0,1-10 Gew.%, |
| HNBR: | teil- und vollhydrierte Nitrilkautschuke |
| EPDM: | Ethylen-Propylen-Dien-Copolymere, |
| EAM: | Ethylen-Acrylat-Copolymere, |
| EVM: | Ethylen-Vinylacetat-Copolymere |
| CO und ECO: | Epichlorhydrinkautschuke, |
| Q: | Silikonkautschuke, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikxogel-Ausgangsprodukte erfolgt zweckmäßig durch Emulsionspolymerisation.

Außerdem können natürlich vorkommende Latices wie z.B. Naturkautschuklatex eingesetzt werden.

In der erfindungsgemäßen Zusammensetzung sind die verwendeten Mikrogele bevorzugt solche, die durch Emulsionspolymerisation und nachfolgende Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt:

Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien sowie doppelbindungshaltige Carbonsäuren, bevorzugt Acrylsäure, Methacrylsäure, Maleinsäure oder Itaconsäure, doppelbindungshaltige Hydroxyverbindungen, bevorzugt Hydroxyethylmethacrylat, Hydroxyethylacrylat oder Hydroxybutylmethacrylat, aminfunktionalisierte Acrylate, aminfunktionalisierte Methacrylate, Acrolein, N-Vinyl-2-pyrollidon, N-Allyl-Harnstoff und N-Allyl-Thioharnstoff, sekundäre Amino(meth)-acrylsäureester, wie 2-tert-Butylaminoethyl methacrylat und 2-tert-Butylaminoethylmethacrylamid.

Die Vernetzung des Kautschukgels kann direkt während der Emulsionspolymerisation durch Copolymerisation mit vernetzend wirkenden multifunktionellen Verbindungen oder aber durch anschließende Vernetzung wie nachstehend beschrieben erreicht werden.

Die direkte Vernetzung während der Emulsionspolymerisation ist bevorzugt. Bevorzugte multifunktionelle Comonomere sind Verbindungen mit mindestens 2, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylendimaleimid, N,N'-(4-Methyl-m-phenylen)dimaleimid und/oder Triallyltrimellitat. Darüber hinaus kommen auch in Betracht die Acrylate und Methacrylate von mehrwertigen, vorzugsweise 2- bis 4-wertigen $C_2$ - $C_{10}$ Alkoholen, wie Ethylenglykol, Propandiol-1,2, Butandiol-1,4, Hexandiol-1,6, Neopentylglykol, Glycerin, Trimethylolpropan, Pentaerythrit und Sorbit. Einsetzbar sind auch Acrylate und Methacrylate von Polyethylenglykol mit 2 bis 20, vorzugsweise 2 bis 8 Oxyethyleneinheiten. Ebenso einsetzbar sind Polyester aus aliphatischen Di- und/oder Polyolen sowie Maleinsäure, Fumarsäure und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder schwach vernetzten Mikrogel-Ausgangsprodukte im Anschluß an die Emulsionspolymerisation setzt man am besten unmittelbar die Latices ein, die bei der Emulsionspolymerisation erhalten werden. Auch Naturkautschuklatices können auf diese Weise vernetzt werden.

Die Vernetzung wird unter Einsatz geeigneter, vernetztend wirkender Chemikalien durchgeführt. Solche geeigneten und vernetzend wirkenden.Chemikalien sind beispielsweise

- ♦ organische Peroxide, wie Dicumylperoxid, t-Butylcumylperoxid, Bis-(t-butyl-peroxy-isopropyl)benzol, Di-t-butylperoxid, 2,5-Di-methylhexan-2,5-dihydroperoxid, 2,5-Dimethylhexin-3,2,5-dihydroperoxid, Dibenzoyl-peroxid, Bis-(2,4-dichlorobenzoyl)peroxid oder t-Butylperbenzoat,
- ♦ organische Azoverbindungen, wie Azo-bis-isobutyronitril oder Azo-bis-cyclohexannitril sowie
- ♦ Di- oder Polymercaptoverbindungen, wie Dimercaptoethan, 1,6-Dimercaptohexan, 1,3,5-Trimercaptotriazin oder Mercapto-terminierte Polysulfidkautschuke, wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig. Sie kann bei Temperaturen von 20˚C bis ca. 180 ˚C gegebenenfalls unter erhöhtem Druck durchgeführt werden (siehe hierzu Houben-Weyl, Methoden der organischen Chemie, 4. Auflage, Band 14/2, Seite 848).

Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller bis hin zu gegebenenfalls vollständiger Hydrierung der C=C Doppelbindung durch Hydrazin (wie in US-A-5,302,696 oder US-A-5,442,009 beschrieben) oder gegebenenfalls andere Hydrierungsmittel, beispielsweise Organometallhydridkomplexe erfolgen.

Vor, während oder nach der Nachvemetzung kann gegebenenfalls eine Teilchenvergrößerung durch Agglomeration durchgeführt werden.

Bei dem oben genannten Herstellungsverfahren für die Mikrogele werden bevorzugt nicht vollständig homogen vernetzte Mikrogele erhalten.

Als Mikrogele für die erfindungsgemäße Zusammensetzung können sowohl modifizierte Mikrogele verwendet werden, die funktionelle Gruppen aufweisen, und zwar insbesondere an der Oberfläche, als auch nicht-modifizierte Mikrogele, die im wesentlichen keine reaktiven Gruppen aufweisen, und zwar insbesondere nicht an der Oberfläche.

Die Modifizierung der Mikrogele kann entweder durch die Pfropfung der Mikrogele mit funktionellen Monomeren oder auch durch die Umsetzung mit niedermolekularen Agentien erfolgen.

Ziel der Mikrogelmodifizierung ist die Verbesserung der Mikrogelverträglichkeit mit der Matrix, um eine gute Verteilbarkeit bei der Herstellung sowie eine gute Ankopplung an die Matrix zu erreichen.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itaconsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff oder N-Allyl-Thioharnstoff sowie sekundären Amino(meth)-acrylsäureestern, wie 2-tert-Butylaminoethylmethacrylat, und 2-tert-Butylaminoethylmethacrylamid, unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, dass das im Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Modifizierte, funktionelle Gruppen aufweisenden Mikrogele können ferner durch chemische Umsetzung der bereits vernetzten Mikrogele mit gegenüber C=C-Doppelbindungen reaktiven niedermolekularen Agentien hergestellt werden. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen chemisch an die Mikrogele gebunden werden können. Dies trifft auch auf N,N'-m-Phenylendiamin zu.

Geeignete Agentien sind beispielsweise:

Schwefelwasserstoff und/oder Alkylpolymercaptane, wie 1,2-Dimercaptoethan oder 1,6-Dimercaptohexan, desweiteren Dialkyl- und/oder Dialkylaryldithiocarbamat, wie die Alkalisalze von Dimethyldithiocarbaminsäure und/oder Dibenzyldithiocarbaminsäure, ferner Alkyl- und/oder Aryl xanthogenate, wie Kaliummethyl xanthogenat und Natriumisopropyl xanthogenat, die Alkali- oder Erdalkalisalze der Dibutyldithiophosphorsäure, Dioctyldithiophosphorsäure und/oder Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und/oder anorganische Peroxide und/oder Azoinitiatoren zugesetzt werden.

Auch eine Modifikation doppelbindungshaltiger Mikrogele z.B. durch Ozonolyse sowie durch Halogenierung mit Chlor, Brom und Jod kommt in Frage. Auch eine weitere Umsetzung modifizierter Mikrogele wie z.B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch Hydroxyl-Gruppen insbesondere auch an der Oberfläche modifiziert. Der Hydroxylgruppengehalt der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt im Bereich von 0,1 bis 100 mg KOH/g Polymer und besonders bevorzugt im Berecih von 0,5 bis 50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gew.%, bezogen auf die Gesamtmenge an eingesetztem Kautschuk-Mikrogel, besonders bevorzugt im Bereich von 0,5 bis 10 Gew.% bezogen auf die Gesamtmenge an eingesetztem Kautschuk-Mikrogel.

Die Modifizierungsreaktionen können bei Temperaturen von 0-180 ˚C, bevorzugt 20-95 ˚C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 Gew.% aller Mikrogel-Partikel zwischen 0,095 Mikrometer und 0,105 Mikrometer groß sind. Andere herstellbare mittlere Durchmesser der Mikrogele liegen beispielsweise im Bereich von 5 bis 500 nm und lassen sich mit gleicher Genauigkeit (d.h. mindestens 75 Gew.% aller Teilchen liegen um das Maximum der integrierten (d.h. kumulativen) Korngrößenverteilungskurve (bestimmt durch Ultrazentrifugation) in einem Bereich von ± 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit entsprechend die Eigenschaften der erfindungsgemäßen Zusammensetzung sowie der daraus beispielsweise hergestellten Vulkanisate beeinflusst werden. Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Die Aufarbeitung der so hergestellten Mikrogele kann beispielsweise durch Eindampfen, Koagulation, durch Co-koagulation mit einem weiteren Latexpolymer, durch Gefrierkoagulation (vgl. US-A-2,187,146) oder durch Sprühtrocknung erfolgen. Bei der Aufarbeitung durch Sprühtrocknung können auch handelsübliche Fließhilfsmittel wie beispielsweise $CaCO_3$ oder Kieselsäure zugesetzt werden.

In einer bevorzugten Ausführungsform enthält die erfindungsgemäße vulkanisierbare Zusammensetzung

a) 100 Gew.-Teile eines oder mehrerer hydrierter Nitrilkautschuke,

b) 1 bis 100 Gew.-Teile, bevorzugt 5 bis 80 Gew.-Teile

einer oder mehrerer ungesättigter Mono- oder Dicarbonsäuren mit 3 bis 10 Kohlenstoffatomen und/oder eines oder mehrerer Salze davon, bevorzugt Zinkdiacrylat oder Zinkmethacrylat,

c) 0,2 bis 8 Gew.-Teile, bevorzugt 0,2 bis 5 Gew.-Teile, besonders bevorzugt 0,2 bis 4 Gew.-Teile

eines oder mehrerer Peroxide, bevorzugt Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid oder Dibenzoylperoxid,

d) 5 bis 60 Gew.-Teile, bevorzugt 10 bis 50 Gew.-Teile

eines oder mehrerer Mikrogel(e), bevorzugt ein BR oder SBR-Mikrogel, mit einer Glastemperatur $T_g$ kleiner als -20˚C, bevorzugt mit einer Glastemperatur $T_g$ kleiner als -50˚C und

e) 0 bis 100 Gew.-Teile, bevorzugt 5 bis 80 Gew.-Teile

einer oder mehrerer üblicher Kautschukadditive, bevorzugt ein oder mehrerer Füllstoffe, insbesondere Ruß, Kieselsäure, Zinkoxid, Magnesiumoxid oder Aluminiumoxid, einer oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydrochinolin (TMQ), styrolisiertes Dipenylamin (DDA), octyliertes Diphenylamin (OCD) oder Zinksalz von 4- und 5-Methylmercaptobenzimidazol (ZMB2) und/oder eines oder mehrerer Formtrennmittel

Übliche Kautschukadditive schließen beispielsweise ein:

Füllstoffe, Füllstoffaktivatoren, Beschleuniger, multifunktionelle Vernetzer, Ozonschutzmittel, Antioxidationsmittel, Verarbeitungsöle, Extenderöle, Weichmacher, Aktivatoren sowie Anvulkanisationshemmer. Auch die Verstärkung der Vulkanisate mit Festigkeitsträgern aus Glas nach der Lehre von US-A-4,826,721 ist möglich sowie die Verstärkung mit aromatischen Polyamiden (Aramid®).

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Diatomeenerde oder Silikate eingesetzt werden.

Als Füllstoffaktivatoren kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin oder Ethylenglycole mit Molekulargewichten von 74 bis 10 000 g/mol dar. Die Menge an Füllstoffaktivatoren beträgt üblicherweise 0,5 bis 10 Gew.-Teile, bezogen auf 100 Gew.-Teile des hydrierten Nitrilkautschuks.

Als Alterungsschutzmittel kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Diphenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden.

Die Alterungsschutzmittel werden üblicherweise in Mengen von 0,1 bis 5 Gew.-Teile, bevorzugt von 0,3 bis 3 Gew.-Teile, bezogen auf die Gesamtmenge Polymer, eingesetzt.

Als Formtrennmittel kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0,2 bis 10 Gew.-Teile, bevorzugt 0,5 bis 5 Gew.-Teile, bezogen auf die Gesamtmenge Polymer eingesetzt.

**Gegenstand der Erfindung** ist ferner ein Verfahren zur Herstellung der vorgenannten vulkanisierbaren Zusammensetzungen, indem man die Komponenten a, b, c und d sowie gegebenenfalls e miteinander mischt. Dies kann unter Einsatz von dem Fachmann bekannten Vorrichtungen und Mischapparaturen erfolgen.

**Gegenstand der Erfindung** ist ferner die Herstellung von vulkanisierten Erzeugnissen, indem man die erfindungsgemäßen vulkanisierbaren Zusammensetzungen einer Temperaturbehandlung aussetzt.

Die Herstellung der vulkanisierten Erzeugnissen wird durchgeführt, indem man die erfindungsgemäßen vulkanisierbaren Zusammensetzungen in üblicher Weise in geeigneten Formwerkzeugen einer Temperatur im Bereich von bevorzugt 120 bis 200˚C, besonders bevorzugt von 140 bis 180 ˚C aussetzt.

**Gegenstand der Erfindung** sind somit auch die vulkanisierten Erzeugnisse, die durch Vulkanisieren der erfindungsgemäßen Zusammensetzungen erhältlich sind.

Bevorzugt handelt es sich bei diesen vulkanisierten Erzeugnissen um Riemen, Walzenbeläge, Dichtungen, Schläuche und Kabel.

Die prinzipielle Herstellung deartiger Riemen, Walzenbeläge, Dichtungen, Schläuche und Kabel ist dem Fachmann bekannt. Für die Herstellung von Riemen kann der Fachmann unter Einsatz der erfindungsgemäßen vulkanisierbaren Zusammensetzungen beispielsweise analog zur Offenbarung der US-A-4,715,607 verfahren.

## BEISPIELE:

**Hestellungsbeispiele für die Mikrogele:**

Nachfolgend wird die Herstellung der Mikrogele beschrieben, die in den weiteren Beispielen verwendet wurden.

Die Mikrogele A und B wurden durch Emulsionspolymerisation hergestellt, wobei folgende Monomere eingesetzt wurden: Butadien, Styrol, Trimethylolpropantrimethacrylat (TMPTMA) und Hydroxyethylmethacrylat (HEMA). Die für die Herstellung der Mikrogele verwendeten Monomeren sowie wesentliche Rezepturbestandteile sind in nachfolgender Tabelle 1 zusammengefasst:

**Tabelle 1:** Zusammensetzung der verwendeten Mikrogele A und B

| Mikrogel | Wasser | | | Emulgatoren | | Monomere | | | |
|---|---|---|---|---|---|---|---|---|---|
| | Start | Akti vierung | Stoppen | Mersolat K30/95 [1] | TCD[2] (20%ig) | Butadien | Styrol | TMPTMA (90 %ig) | HEMA (96 %ig) |
| | [g] | [g] | [g] | [g] | [g] | [g] | [g] | [g] | [g] |
| A (Tg = -75˚C) | 12608 | 287 | 530 | 137 | 250 | 3805,5 | 0 | 172 | 322,5 |
| B (Tg = -65˚C) | 13742 | 251 | 125 | 137 | 250 | 2740,5 | 304,5 | 105 | 350,0 |

1) **Mersolat® K 30/95** (Lanxess Deutschland GmbH): Isomerenmischung der Natrium-Salze langkettiger Alkylsulfonsäuren. Der Gehalt an aktiver Substanz beträgt 95 Gew. %.
2) **TCD** Natrium-Salz des Umsetzungsprodukts von bishydroxyformyliertem Dicyclopentadien mit Hexahydrophthalsäureanhydrid. Es wird eine wässrige Lösung mit 20 Gew.% aktiver Substanz eingesetzt (Der Emulgator wurde hergestellt gemäß US-A-5,100,945)

Für die Herstellung der Mikrogele wurden zuerst die in der Tabelle 1 angegebenen Mengen der Emulgatoren Mersolat® K30/95 und TCD in Wasser gelöst und in einem 40 l-Autoklaven vorgelegt. Der Autoklav wurde dreimal evakuiert und mit Stickstoff beaufschlagt. Danach wurden die in der Tabelle 1 angegebenen Monomeren zugegeben. Die Monomeren wurden unter Rühren in der Emulgatorlösung bei 30˚C emulgiert.

Anschließend wurde eine wässrige Lösung bestehend aus 171 g Wasser, 1,71 g Ethylendiamin tetraessigsäure (Merck-Schuchardt), 1,37 g Eisen(II)-sulfat*7H$_2$O, 3,51 g Natriumformaldehydsulfoxylat-hydrat (Merck-Schuchardt) sowie 5,24 g Trinatriumphosphat*12H$_2$O zudosiert. Die hierfür verwendete Wassermenge ist in der in der Tabelle 1 in der Spalte "Start" angegebenen Wassermenge enthalten.

Die Reaktion wurde gestartet durch Zugabe von 5,8 g p-Menthanhydroperoxid, 50%ig (Trigonox® NT 50 der Akzo-Degussa), das mittels 10,53 g Mersolat® K30/95 in der Hälfte der in der Spalte "Aktivierung" aufgelisteten Wassermenge emulgiert wurde.

Nach 2,5 Stunden Reaktionszeit wurde die Reaktionstemperatur auf 40 ˚C erhöht. Nach einer weiteren Stunde Reaktionszeit wurde mit der gleichen Menge an Initiatorlösung (Trigonox® NT50/Wasser/Mersolat®K30/95), die auch für den Polymerisationsstart verwendet wurde, nachaktiviert. Hierbei wurde die Polymerisationstemperatur auf 50˚C erhöht.

Bei Erreichen eines Polymerisationsumsatzes >95 % wurde die Polymerisation durch Zugabe von 23,5 g Diethylhydroxylamin abgestoppt. Hierfür wurde Diethylhydroxylamin in der Wassermenge gelöst, die in der Tabelle 1 in der Spalte "Stoppen" aufgelistet ist.

Danach wurden nicht umgesetzte Monomere durch Strippen mit Wasserdampf aus dem Latex entfernt. Der Latex wurde filtriert und wie im Beispiel 2 der US-A-6,399,706 mit Stabilisator versetzt, koaguliert und getrocknet.

Die Gele wurden sowohl im Latexzustand mittels Ultrazentrifugation (Durchmesser und spezifische Oberfläche) sowie als Festprodukt bezüglich der Löslichkeit in Toluol (Gelgehalt, Quellungsindex/QI), durch acidimitrische Titration (OH-Zahl und COOH-Zahl) und mittels DSC (Glastemperatur/$T_g$ und Breite der $T_g$-Stufe) charakterisiert.

Die charakteristische Daten der Mikrogele sind in nachfolgender Tabelle 2 zusammengestellt:

**Tabelle 2:** Eigenschaften der Mikrogele A und B

| Mikrogel | Durchmesser | | | $O_{spez}$ | Gel-gehalt | QI | Tg | $\Delta$Tg | OH- Zahl | Säure-Zahl |
|---|---|---|---|---|---|---|---|---|---|---|
| | $d_{10}$ [nm] | $d_z$ [nm] | $d_{80}$ [nm] | [m²/g] | [Gew.%] | | [˚C] | [˚C] | [mg$_{KOH}$/ g$_{Pol.}$] | [mg$_{KOH}$/ g$_{Pol.}$] |
| A | 43,5 | 50,9 | 55,7 | 127 | 91,7 | 13,1 | -75 | 15,2 | 33 | 7,4 |
| B | 35,4 | 48,2 | 55,1 | 139 | 94,8 | 7,4 | -65,5 | 12 | 37,8 | 8,6 |

In **Tabelle 2** bedeuten:

$O_{spez.}$:  spezifische Oberfläche in m²/g

$d_z$:  der Durchmesser $\bar{d}_z$ ist nach DIN 53 206 als der Median- oder Zentralwert definiert, oberhalb und unterhalb dessen jeweils die Hälfte aller Teilchengrößen liegt. Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung praktisch nicht ändert.

$d_{10}$ bzw.$d_{80}$:  Die Durchmesserangaben $d_{10}$ und $d_{80}$ bedeuten, dass jeweils 10 bzw. 80 Gew. % der Teilchen einen Durchmesser besitzen, der kleiner als der angegebene Wert ist, wobei die Teilchengrößenverteilung mittels Ultrazentrifugation ermittelt wird. Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung praktisch nicht ändert.

$T_g$:  Glastemperatur. Sie wurde wie oben in der Anmeldung bereits erwähnt bestimmt.

$\Delta T_g$:  Breite der Tg-Stufe

Sie wurde wie oben in der Anmeldung bereits erwähnt bestimmt.

Für die Bestimmung von $T_g$ und $\Delta T_g$ wird das Gerät DSC-2 von Perkin-Elmer benutzt.

QI:  bedeutet Quellungsindex.

Er wurde wie folgt bestimmt: Der Quellungsindex wird aus dem Gewicht des in Toluol bei 23˚ für 24 Stunden gequollenen lösungsmittelhaltigen Mikrogels und dem Gewicht des trockenen Mikrogels berechnet:

QI = Naßgewicht des Mikrogels /Trockengewicht des Mikrogels

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 ˚C bis zur Gewichtskonstanz getrocknet und nochmals gewogen.

OH-Zahl:  bedeutet die Hydroxylzahl Die OH-Zahl wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl:  Die Säurezahl wird wie oben bereits erwähnt nach DIN 53402 bestimmt und entspricht der Menge KOH in mg, die erforderlich ist um 1 g des Polymers zu neutralisieren.

Gelgehalt:  Der Gelgehalt entspricht dem in Toluol unlöslichen Anteil bei 23˚C. Er wird wie oben beschrieben bestimmt.

## Herstellung, Vulkanisation und Charakterisierung der Kautschukmischungen

Für die Herstellung der Kautschukmischungen wurde ein Innenmischer mit 1.5 l Inhalt und mit "intermeshing rotor geometry" (GK1.5E von Werner & Pfleiderer) verwendet. Zuerst wurde der hydrierte Nitrilkautschuk in den Mischer gegeben. Nach 30 s wurden Gel und Zinkdiacrylat zugegeben und bei konstanter Rotordrehzahl bei 40 U/min gemischt. Nach einer Mischzeit von 4 min wurde die Mischung ausgeworfen. Nach einer Lagerzeit von 24h wurde die Mischung noch einmal 4 min bei 40 U/min gemischt. Anschließend wurden Perkadox® 14-40 B-GR, Vulkanox® ZMB2/5 und Rhenofit® DDA-70 auf der Walze bei 40˚C eingemischt.

Bei den nachfolgenden Beispielen 1-3 handelt es sich um Vergleichsbeispiele, bei den Beispielen 4 und 5 um erfindungsgemäße Beispiele.

**Tabelle 3:** Zusammensetzung der Kautschukmischungen in Gew.-Teilen

| Kautschukmischungen | | 1 | 2 | 3 | 4 | 5 |
|---|---|---|---|---|---|---|
| Therban® A 3406 [1] | | 100 | 100 | 100 | 100 | 100 |
| Mikrogel A | | 0 | 0 | 0 | 10 | 0 |
| Mikrogel B | | 0 | 0 | 0 | 0 | 10 |
| Saret® SR633 [2] | | 60 | 70 | 80 | 60 | 60 |
| Perkadox® 14-40 B-GR [3] | | 4 | 4 | 4 | 4 | 4 |
| Vulkanox® ZMB2/5 [4] | | 0,8 | 0,8 | 0,8 | 0,8 | 0,8 |
| Rhenofit® DDA-70 [5] | | 2 | 2 | 2 | 2 | 2 |
| In **Tabelle 3** wurden verwendet<br>1) Hydrierter Nitrilkautschuk der Lanxess Deutschland GmbH mit 34 Gew.% Acrylnitril, ML 1+4 @ 100˚C) = 77; Restdoppelbindungsgehalt: 3,5%<br>2) Zinkdiacrylat der Firma Sartomer<br>3) Dicumylperoxid der Akzo in Granulatform mit einem Wirkstoffgehalt von 40%<br>4) Zinkmethylmercaptobenzimidazol der Lanxess Deutschland GmbH<br>5) Octyliertes Diphenylamin mit einem Wirkstoffgehalt von 70% Gew. der RheinChemie Rheinau GmbH | | | | | | |

An den unvulkanisierten Compounds wurden die in der **Tabelle 4** angegebenen Werte bestimmt:

**Tabelle 4:** Eigenschaften der unvulkanisierten Kautschukmischungen

| Compoundeigenschaften: | | 1 | 2 | 3 | 4 | 5 |
|---|---|---|---|---|---|---|
| Mooneyviskosität (ML1+4/100˚C) nach ASTM D1646 | [ME] | 40 | 37 | 32 | 39 | 42 |
| Mooneyrelaxation (MR) nach ISO 289, Teil 4 | [%] | 6,7 | 6,9 | 7,4 | 6 | 7,4 |

Die Ergebnisse zeigen, dass die erfindungsgemäßen Kautschukmischungen (4 und 5) bezüglich Mooneyviskosität und Mooneyrelaxation mit den Referenzvulkanisaten (1, 2 und 3) vergleichbar sind.

Das Vulkanisationsverhalten der Mischungen wurde nach ASTM D5289 bei 180˚C mit Hilfe des Moving Die Rheometers MDR2000 der Firma Alpha Technology untersucht. Auf diese Weise wurden die charakteristische Vulkameterwerte $F_a$, $F_{max}$, $F_{max}.-F_a$, $t_{10}$, $t_{50}$, $t_{90}$ und $t_{95}$ bestimmt.

**Tabelle 5:** Vulkanisationsverhalten der Kautschukmischungen

| Mischungs-Nr.: | | 1 | 2 | 3 | 4 | 5 |
|---|---|---|---|---|---|---|
| $F_a$ | [dNm] | 1,7 | 1,4 | 1,5 | 0,6 | 1,8 |
| $F_{max}$ | [dNm] | 29,3 | 32,5 | 39 | 31 | 31,4 |
| $F_{max}$ - $F_a$ | [dNm] | 27,6 | 31,1 | 37,5 | 30,4 | 29,6 |
| $t_{10}$ | [min] | 0,8 | 0,9 | 0,95 | 0,9 | 0,8 |
| $t_{50}$ | [min] | 1,3 | 1,3 | 1,4 | 1,3 | 1,3 |
| $t_{90}$ | [min] | 5,1 | 4,6 | 4,7 | 4,7 | 5,3 |
| $t_{95}$ | [min] | 6,9 | 6,3 | 6,4 | 6,9 | 7,5 |

Nach DIN 53 529, Teil 3 bedeuten:

$F_a$:            Vulkameteranzeige im Minimum der Vernetzungsisotherme
$F_{max}$:         Maximum der Vulkameteranzeige
$F_{max} - F_a$:    Differenz der Vulkameteranzeigen zwischen Maximum und Minimum
$t_{10}$:           Zeitpunkt, bei dem 10% des Endumsatzes erreicht sind
$t_{50}$:           Zeitpunkt, bei dem 50% des Endumsatzes erreicht sind
$t_{90}$:           Zeitpunkt, bei dem 90% des Endumsatzes erreicht sind
$t_{95}$:           Zeitpunkt, bei dem 95% des Endumsatzes erreicht sind

Die Versuchsserie zeigt, dass die erfindungsgemäß hergestellten Kautschukmischungen (4 und 5) ein mit den Referenzmischungen (1, 2 und 3) vergleichbares Vulkanisationsverhalten aufweisen.

Die Kautschukmischungen wurden anschließend in einer Plattenpresse unter einem Druck von 170 bar bei 180°C 9 min vulkanisiert. An den ungealterten Vulkanisaten wurden bei 23 °C die in Tabelle 6 angegebenen Prüfwerte bestimmt.

**Tabelle 6:** Eigenschaften der vulkanisierten Kautschukmischungen bei 23°C

| Vulkanisateigenschaften bei 23°C (ohne Alterung) | | 1 | 2 | 3 | 4 | 5 |
|---|---|---|---|---|---|---|
| Shore A Härte DIN 53505 | [ShA] | 75 | 74 | 78 | 79 | 77 |
| Rückprallelastizität DIN 53512 | [%] | 48 | 46 | 46 | 48 | 47 |
| Abrieb DIN 53516 | [mm$^3$] | 66 | 83 | 107 | 70 | 79 |
| Bruchdehnung ($\varepsilon_b$) DIN 53504 | [%] | 399 | 417 | 410 | 357 | 372 |
| Reißfestigkeit ($\sigma_{max}$) DIN 53504 | [MPa] | 25,7 | 22,3 | 19,9 | 27 | 24,0 |
| Spannungswert bei 25% Dehnung ($\sigma_{25}$) DIN 53504 | [MPa] | 2,2 | 2,3 | 2,6 | 2,7 | 2,5 |
| Spannungswert bei 100% Dehnung ($\sigma_{100}$) DIN 53504 | [MPa] | 5,2 | 5,8 | 6,3 | 6,4 | 6,2 |
| Spannungswert bei 300% Dehnung ($\sigma_{300}$) DIN 53504 | [MPa] | 15,8 | 14,3 | 14,0 | 21,3 | 17,8 |

Die Versuchsserie zeigt, dass die erfindungsgemäß hergestellten Vulkanisate (4 und 5) bezüglich Shore-A Härte, Rückprallelastiziät und Abrieb mindestens gleichwertig mit den Referenzvulkanisaten (1,2 und 3) sind.

An den ungealterten Proben wurden darüberhinaus bei 130°C die in **Tabelle 7** angegebenen Prüfwerte bestimmt.

**Tabelle 7:** Eigenschaften der vulkanisierten Kautschukmischungen bei 130°C

| Vulkanisateigenschaften bei 130°C (ohne Alterung) | | 1 | 2 | 3 | 4 | 5 |
|---|---|---|---|---|---|---|
| Bruchdehnung ($\varepsilon_b$) nach DIN 53504 | [%] | 184 | 171 | 169 | 187 | 168 |
| Reißfestigkeit ($\sigma_{max}$) DIN 53504 | [MPa] | 4,8 | 3,7 | 3,7 | 5 | 4,5 |
| Spannungswert bei 25% Dehnung ($\sigma_{25}$) DIN 53504 | [MPa] | 1,4 | 1,2 | 1,5 | 1,6 | 1,6 |
| Spannungswert bei 100% Dehnung ($\sigma_{100}$) DIN 53504 | [MPa] | 3,3 | 2,9 | 3,5 | 3,5 | 3,7 |
| $\sigma_{25} \times \varepsilon_b$ | [MPa] x [%] | 258 | 205 | 233 | 299 | 268 |
| $\sigma_{100} \times \varepsilon_b$ | [MPa] x [%] | 607 | 496 | 592 | 655 | 622 |

Die Versuchsserie zeigt, dass die erfindungsgemäß hergestellten Vulkanisate (4 und 5) den Referenzvulkanisaten (1, 2 und 3) im Hinblick auf die Reissfestigkeit leicht und bezüglich des Produkts $\sigma_{25} \times \varepsilon_b$ sowie $\sigma_{100} \times \varepsilon_b$ deutlich überlegen sind.

Zur Charakterisierung des Alterungsverhaltens wurden anschließend sämtliche Vulkanisate nach DIN 53508 7 Tage bei 150°C gealtert.

Danach wurden bei einer Messtemperatur von 130°C die in **Tabelle 8** angegebenen Werte ermittelt.

**Tabelle 8:** Eigenschaften der vulkanisierten Kautschukmischungen nach Alterung bei 150˚C / 7 Tage (Prüftemperatur: 130˚C)

| **Vulkanisateigenschaften bei 130˚C (nach 7 Tagen Alterung bei 150˚C)** | | **1** | **2** | **3** | **4** | **5** |
|---|---|---|---|---|---|---|
| Bruchdehnung ($\varepsilon_b$) DIN 53504 | [%] | 158 | 168 | 149 | 148 | 145 |
| Reißfestigkeit ($\sigma_{max.}$) DIN 53504 | [MPa] | 5,6 | 5,6 | 5,8 | 6 | 5,8 |
| Spannungswert bei 25% Dehnung ($\sigma_{25}$) DIN 53504 | [MPa] | 1,8 | 1,8 | 2,1 | 2,2 | 2,2 |
| Spannungswert bei 100% Dehnung ($\sigma_{100}$) DIN 53504 | [MPa] | 4,2 | 4,2 | 4,6 | 5,0 | 5,1 |
| $\sigma_{25}$ x $\varepsilon_b$ | [MPa] x [%] | 284 | 302 | 313 | 326 | 319 |
| $\sigma_{100}$ x $\varepsilon_b$ | [MPa] x [%] | 664 | 705 | 685 | 740 | 740 |

Die Versuchsserie zeigt, dass die erfindungsgemäß hergestellten Vulkanisate (4 und 5) den Referenzvulkanisaten (1, 2 und 3) bezüglich des Produkts aus $\sigma_{25}$ x $\varepsilon_b$ sowie $\sigma_{100}$ x $\varepsilon_b$ nach einer 7 tägigen Heißluftalterung bei 150˚C (Messtemperatur: 130˚C) überlegen sind.

Die Bestimmung der physikalischen Parameter erfolgte nach den jeweils einschlägigen DIN-Vorschriften. Ergänzend wird auf Kleemann, Weber, Formeln und Tabellen für die Elastomerverarbeitung, Dr. Gupta Verlag, 1994 hingewiesen.

**Patentansprüche**

1. Vulkanisierbare Zusammensetzung enthaltend

    a) ein oder mehrere hydrierte Nitrilkautschuke,
    b) eine oder mehrere ungesättigte Carbonsäure(n) und/oder eines oder mehrere Salz(e) davon,
    c) mindestens ein Peroxid und
    d) mindestens ein Mikrogel mit einer Glastemperatur kleiner -20˚C.

2. Vulkanisierbare Zusammensetzung nach Anspruch 1, wobei als Komponente a) ein oder mehrere hydrierte Nitrilkautschuke eingesetzt werden, bei denen es sich um Co- oder Terpolymere auf der Basis mindestens eines konjugierten Diens und mindestens eines $\alpha,\beta$-ungesättigten Nitrilmonomeren sowie gegebenenfalls weiterer copolymerisierbarer Monomere handelt, bei denen die einpolymerisierten Dieneinheiten ganz- oder teilweise hydriert sind.

3. Vulkanisierbare Zusammensetzung nach Anspruch 1 oder 2, wobei als Komponente a) ein oder mehrere hydrierte Nitrilkautschuke eingesetzt werden, bei denen die Mooney-Viskosität (ML 1+4 @ 100 ˚C) im Bereich von 10 bis 120 ME, bevorzugt im Bereich von 15 bis 100 ME liegt, wobei die Bestimmung der Mooney-Viskosität gemäß ASTM Norm D1646 erfolgt.

4. Vulkanisierbare Zusammensetzung nach einem oder mehreren der Ansprüche 1-3, wobei als Komponente b) eine oder mehrere ungesättigte Carbonsäure(n) und/oder eines oder mehrere Salz(e) davon eingesetzt werden und die ungesättigte Carbonsäure eine $\alpha,\beta$-ethylenisch ungesättigte Mono- oder Dicarbonsäure mit 3 bis 10 Kohlenstoffatomen, bevorzugt Methacrylsäure, Acrylsäure, Zimtsäure, Crotonsäure oder Itaconsäure bedeuten kann und die Salze solche von Natrium, Kalium, Magnesium, Calcium, Zink, Barium, Aluminium, Zinn, Zirkonium oder Lithium sein können.

5. Vulkanisierbare Zusammensetzung nach einem oder mehreren der Ansprüche 1-4, wobei als Komponente b) ein oder mehrere Metalldiacrylate und/oder Metalldimethacrylate, bevorzugt Zinkdiacrylat oder Zinkdimethacrylat eingesetzt werden.

6. Vulkanisierbare Zusammensetzungen nach einem oder mehreren der Ansprüche 1-5, wobei als Komponente c) mindestens ein Peroxid, bevorzugt mindestens ein organisches Peroxid, insbesondere Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat, 4,4-Di(t-butylperoxy)valeriansäurebutylester oder 1,1-Bis(t-butylperoxy)-3,3,5-trimethylcyclohexan eingesetzt wird.

7. Vulkanisierbare Zusammensetzung nach einem oder mehreren der Ansprüche 1-6, wobei als Komponente d) mindestens ein Mikrogel mit einer Glastemperatur kleiner -20°C eingesetzt wird, bei dem es sich um ein vernetztes Homopolymer oder vernetztes statistisches Copolymer handelt.

8. Vulkanisierbare Zusammensetzung nach einem oder mehreren der Ansprüche 1-7, wobei als Komponente d) mindestens ein Mikrogel mit einer Glastemperatur kleiner -20°C eingesetzt wird, welches in Toluol bei 23°C unlösliche Anteile ("Gelgehalt") von mindestens 70 Gew.-%, bevorzugt mindestens 80 Gew.-%, und besonders bevorzugt mindestens 90 Gew.-% aufweist.

9. Vulkanisierbare Zusammensetzung nach einem oder mehreren der Ansprüche 1-8, wobei als Komponente d) mindestens ein Mikrogel mit einer Glastemperatur kleiner -20°C eingesetzt wird, welches in Toluol bei 23°C einen Quellungsindex ("QI") von weniger als 80, bevorzugt von weniger als 60 und insbesondere von weniger als 40 aufweist, wobei der Quellungsindex aus dem Gewicht des in Toluol bei 23°C für 24 Stunden gequollenen lösungsmittelhaltigen Mikrogels (nach Zentrifugation mit 20.000 Upm) und dem Gewicht des trockenen Mikrogels gemäß folgender Formel berechnet wird:

$$QI = \text{Naßgewicht des Mikrogels /Trockengewicht des Mikrogels.}$$

10. Vulkanisierbare Zusammensetzung nach einem oder mehreren der Ansprüche 1-9, wobei als Komponente d) mindestens ein Mikrogel mit einer Glastemperatur kleiner -20°C, bevorzugt mit einer Glastemperatur $T_g$ im Bereich von -100°C bis -20°C, besonders bevorzugt im Bereich von -80°C bis -20°C und insbesondere im Bereich von -80 °C bis -50°C eingesetzt wird.

11. Vulkanisierbare Zusammensetzung nach einem oder mehreren der Ansprüche 1-10, wobei als Komponente d) mindestens ein Mikrogel mit einer Glastemperatur kleiner -20°C eingesetzt wird, welches ausgewählt ist aus der Gruppe bestehend aus BR (Polybutadien), IR (Polyisopren), SBR (statistische Styrol-Butadien-Copolymere mit Styrolgehalten von 1-60, vorzugsweise 5-50 Gew.%), X-SBR (carboxylierte Styrol-Butadien-Copolymere), FKM (Fluorkautschuk), ABR (Butadien-Acrylsäure-$C_{1\text{-}4}$-Alkylester-Copolymere), ACM (Acrylatkautschuk), NBR (Butadien-Acrylnitril-Copolymere mit Acrylnitrilgehalten von 5-60, vorzugsweise 10-50 Gew.%), X-NBR (carboxylierte Nitrilkautschuke), CR (Polychloropren), IIR (Isobutylen-Isopren-Copolymere mit Isoprengehalten von 0,5-10 Gew.%), BIIR (bromierte Isobutylen-Isopren-Copolymere mit Bromgehalten von 0,1-10 Gew.%), CIIR (chlorierte Isobutylen-Isopren-Copolymere mit Chlorgehalten von 0,1-10 Gew.%), HNBR (teil- und/oder vollhydrierte Nitrilkautschuke), EPDM (Ethylen-Propylen-Dien-Copolymere), EAM (Ethylen-Acrylat-Copolymere), EVM (Ethylen-VinylacetatCopolymere), CO und ECO (Epichlorhydrinkautschuke), Q (Silikonkautschuke), AU (Polyesterurethan-polymerisate), EU (Polyetherurethanpolymerisate), ENR (Epoxydierter Naturkautschuk) und Mischungen davon.

12. Vulkanisierbare Zusammensetzung nach einem oder mehreren der Ansprüche 1-11 enthaltend

 a) 100 Gew.-Teile einer oder mehrerer hydrierter Nitrilkautschuke,
 b) 1 bis 100 Gew.-Teile, bevorzugt 5 bis 80 Gew.-Teile
 einer oder mehrerer ungesättigter Mono- oder Dicarbonsäuren mit 3 bis 10 Kohlenstoffatomen und/oder eines oder mehrerer Salze davon, bevorzugt Zinkdiacrylat oder Zinkmethacrylat,
 c) 0,2 bis 8 Gew.-Teile, bevorzugt 0,2 bis 5 Gew.-Teile
 eines oder mehrerer Peroxide, bevorzugt Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid oder Dibenzoylperoxid,

d) 5 bis 60 Gew.-Teile, bevorzugt 10 bis 50 Gew.-Teile

eines oder mehrerer Mikrogele, bevorzugt ein BR oder SBR-Mikrogel, mit einer Glastemperatur $T_g$ kleiner als -20˚C, bevorzugt mit einer Glastemperatur $T_g$ kleiner als -50˚C und

e) 0 bis 100 Gew.-Teile, bevorzugt 5 bis 80 Gew.-Teile

einer oder mehrer üblicher Kautschukadditive, bevorzugt ein oder mehrerer Füllstoffe, insbesondere Ruß, Kieselsäure, Zinkoxid, Magnesiumoxid oder Aluminiumoxid, einer oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD) oder Zinksalz von 4- und 5-Methylmercaptobenzimidazol (ZMB2) und/oder eines oder mehrerer Formtrennmittel.

**13.** Verfahren zur Herstellung der vulkanisierbaren Zusammensetzungen nach einem oder mehreren der Ansprüche 1 bis 12, **dadurch gekennzeichnet, dass** man die Komponenten a, b, c und d miteinander mischt.

**14.** Verfahren zur Herstellung von vulkanisierten Erzeugnissen, **dadurch gekennzeichnet, dass** man die vulkanisierbare Zusammensetzung nach einem oder mehreren der Ansprüche 1-12 einer Temperaturbehandlung aussetzt.

**15.** Verfahren nach Anspruch 14, wobei man die vulkanisierbare Zusammensetzung nach einem oder mehreren der Ansprüche 1-12 in Formwerkzeugen einer Temperatur im Bereich von 120 bis 200˚C, bevorzugt von 140 bis 180 ˚C aussetzt.

**16.** Verwendung der vulkanisierbaren Zusammensetzung nach einem oder mehreren der Ansprüche 1 bis 12 zur Herstellung von vulkanisierten Erzeugnissen.

**17.** Verwendung der vulkanisierbaren Zusammensetzung nach einem oder mehreren der Ansprüche 1 bis 12 zur Herstellung von Riemen, Walzenbelägen, Dichtungen, Schläuchen und Kabeln.

**18.** Vulkanisierte Erzeugnisse, erhältlich durch Vulkanisieren der vulkanisierbaren Zusammensetzung nach einem oder mehreren der Ansprüche 1 bis 12.

**19.** Riemen, enthaltend das vulkanisierte Erzeugnis nach Anspruch 18.

**20.** Walzenbelag, enthaltend das vulkanisierte Erzeugnis nach Anspruch 18.

**21.** Schläuche, enthaltend das vulkanisierte Erzeugnis nach Anspruch 18.

**22.** Kabel, enthaltend das vulkanisierte Erzeugnis nach Anspruch 18.

**Claims**

**1.** Vulcanizable composition comprising

a) one or more hydrogenated nitrile rubbers,
b) one or more unsaturated carboxylic acids and/or one or more salts thereof,
c) at least one peroxide and
d) at least one microgel whose glass transition temperature is below -20˚C.

**2.** Vulcanizable composition according to Claim 1, where the component a) used comprises one or more hydrogenated nitrile rubbers which are co- or terpolymers based on at least one conjugated diene and on at least one $\alpha,\beta$-unsaturated nitrile monomer and also if appropriate on other copolymerizable monomers, in which the diene units incorporated into the polymer have been entirely or to some extent hydrogenated.

**3.** Vulcanizable composition according to Claim 1 or 2, where the component a) used comprises one or more hydrogenated nitrile rubbers in which the Mooney viscosity (ML 1+4 @ 100˚C) is in the range from 10 to 120 MU, preferably in the range from 15 to 100 MU, where the Mooney viscosity is determined to ASTM standard D1646.

**4.** Vulcanizable composition according to one or more of Claims 1-3, where the component b) used comprises one or more unsaturated carboxylic acids and/or one or more salts thereof and the unsaturated carboxylic acid can be an α,β-ethylenically unsaturated mono- or dicarboxylic acid having from 3 to 10 carbon atoms, preferably methacrylic acid, acrylic acid, cinnamic acid, crotonic acid or itaconic acid and the salts can be those of sodium, potassium, magnesium, calcium, zinc, barium, aluminium, tin, zirconium or lithium.

5. Vulcanizable composition according to one or more of Claims 1-4, where the component b) used comprises one or more metal diacrylates and/or metal dimethacrylates, preferably zinc diacrylate or zinc dimethacrylate.

6. Vulcanizable compositions according to one or more of Claims 1-5, where the component c) used comprises at least one peroxide, preferably at least one organic peroxide, in particular dicumyl peroxide, tert-butyl cumyl peroxide, bis(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate, butyl 4,4-di(tert-butylperoxy)valerate or 1,1-bis(tert-butylperoxy)-3,3,5-trimethylcyclohexane.

7. Vulcanizable composition according to one or more of Claims 1-6, where the component d) used comprises at least one microgel whose glass transition temperature is below -20˚C and which is a crosslinked homopolymer or crosslinked random copolymer.

8. Vulcanizable composition according to one or more of Claims 1-7, where the component d) used comprises at least one microgel whose glass transition temperature is below -20˚C and which has at least 70% by weight of fractions ("gel content") insoluble in toluene at 23˚C, preferably at least 80% by weight, and particularly preferably at least 90% by weight.

9. Vulcanizable composition according to one or more of Claims 1-8, where the component d) used comprises at least one microgel whose glass transition temperature is below -20˚C and which has a swelling index ("SI") in toluene at 23˚C of less than 80, preferably less than 60 and in particular less than 40 where the swelling index is calculated from the weight of the solvent-containing microgel swollen for 24 hours in toluene at 23˚C (after centrifuging at 20 000 rpm) and the weight of the dry microgel by using the following formula:

$$SI = \text{wet weight of microgel/dry weight of microgel.}$$

10. Vulcanizable composition according to one or more of Claims 1-9, where the component d) used comprises at least one microgel whose glass transition temperature is below -20˚C, preferably whose glass transition temperature $T_g$ is in the range from -100˚C to -20˚C, particularly preferably in the range from -80˚C to -20˚C and in particular in the range from -80˚C to -50˚C.

11. Vulcanizable composition according to one or more of Claims 1-10, where the component d) used comprises at least one microgel whose glass transition temperature is below -20˚C and which has been selected from the group consisting of BR (polybutadiene), IR (polyisoprene), SBR (random styrene-butadiene copolymers with styrene contents of 1-60% by weight, preferably 5-50% by weight), X-SBR (carboxylated styrene-butadiene copolymers), FKM (fluororubber), ABR (butadiene-$C_{1-4}$-alkyl acrylate copolymers), ACM (acrylate rubber), NBR (butadiene-acrylonitrile copolymers with acrylonitrile contents of 5-60% by weight, preferably 10-50% by weight), X-NBR (carboxylated nitrile rubbers), CR (polychloroprene), IIR (isobutylene-isoprene copolymers with isoprene contents of 0.5-10% by weight), BIIR (brominated isobutylene-isoprene copolymers with bromine contents of 0.1-10% by weight), CIIR (chlorinated isobutylene-isoprene copolymers with chlorine contents of 0.1-10% by weight), HNBR (partially and/or fully hydrogenated nitrile rubbers), EPDM (ethylene-propylene-diene copolymers), EAM (ethylene-acrylate copolymers), EVM (ethylenevinyl acetate copolymers), CO and ECO (epichlorohydrin rubbers), Q (silicone rubbers), AU (polyester urethane polymers), EU (polyether urethane polymers), ENR (epoxidized natural rubber) and mixtures thereof.

12. Vulcanizable composition according to one or more of Claims 1-11 comprising

a) 100 parts by weight of one or more hydrogenated nitrile rubbers,
b) from 1 to 100 parts by weight, preferably from 5 to 80 parts by weight,

of one or more unsaturated mono- or dicarboxylic acids having from 3 to 10 carbon atoms and/or of one or more salts thereof, preferably zinc diacrylate or zinc methacrylate,

c) from 0.2 to 8 parts by weight, preferably from 0.2 to 5 parts by weight,

of one or more peroxides, preferably dicumyl peroxide, tert-butyl cumyl peroxide, bis(tert-butylperoxyisopropyl) benzene, di-tert-butyl peroxide, 2,5-dimethylhexane 2,5-dihydroperoxide, 2,5-dimethylhex-3-yne 2,5-dihydroperoxide or dibenzoyl peroxide,

d) from 5 to 60 parts by weight, preferably from 10 to 50 parts by weight,

of one or more microgels, preferably a BR or SBR microgel, whose glass transition temperature $T_g$ is below -20°C, preferably whose glass transition temperature $T_g$ is below -50°C and

e) from 0 to 100 parts by weight, preferably from 5 to 80 parts by weight,

of one or more conventional rubber additives, preferably one or more fillers, in particular carbon black, silica, zinc oxide, magnesium oxide or aluminium oxide, of one or more filler activators, in particular based on an organic silane, of one or more antioxidants, in particular oligomerized 2,2,4-trimethyl-1,2-dihydroquinoline (TMQ), styrenated diphenylamine (DDA), octylated diphenylamine (OCD) or zinc salt of 4- and 5-methylmercaptobenzimidazole (ZMB2) and/or of one or more mould-release agents.

13. Process for preparation of the vulcanizable compositions according to one or more of Claims 1 to 12, **characterized in that** the components a, b, c and d are mixed with one another.

14. Process for production of vulcanized products, **characterized in that** the vulcanizable composition according to one or more of Claims 1-12 is exposed to heat treatment.

15. Process according to Claim 14, where the vulcanizable composition according to one or more of Claims 1-12 is exposed in moulds to a temperature in the range from 120 to 200°C, preferably from 140 to 180°C.

16. Use of the vulcanizable composition according to one or more of Claims 1 to 12 for production of vulcanized products.

17. Use of the vulcanizable composition according to one or more of Claims 1 to 12 for the production of drive belts, of roll coverings, of gaskets, of hoses and of cables.

18. Vulcanized products obtainable via vulcanization of the vulcanizable composition according to one or more of Claims 1 to 12.

19. Drive belts comprising the vulcanized product according to Claim 18.

20. Roll covering comprising the vulcanized product according to Claim 18.

21. Hoses comprising the vulcanized product according to Claim 18.

22. Cables comprising the vulcanized product according to Claim 18.

**Revendications**

1. Composition vulcanisable, contenant

a) un ou plusieurs caoutchoucs nitriles hydrogénés,
b) un ou plusieurs acides carboxyliques insaturés et/ou un ou plusieurs de leurs sels,
c) au moins un peroxyde et
d) au moins un microgel dont la température vitreuse est inférieure à -20 °C.

2. Composition vulcanisable selon la revendication 1, s'agissant, en ce qui concerne les substances mises en oeuvre en tant que composant a), d'un ou de plusieurs caoutchoucs nitriles hydrogénés qui sont des co- ou terpolymères à base d'au moins un diène conjugué et d'au moins un monomère nitrile α-β-insaturé ainsi que, le cas échéant, d'autres monomères copolymérisables, les unités de type diène étant, une fois intégrées dans la chaîne polymère, partiellement ou totalement hydrogénées.

3. Composition vulcanisable selon les revendications 1 ou 2, le ou les caoutchouc(s) nitrile(s) hydrogéné(s) mis en oeuvre en tant que composant a) présentant une viscosité Mooney (ML 1+4 @ 100 ˚C) comprise entre 10 et 120 ME, de préférence entre 15 et 100 ME, le viscosité Mooney étant déterminée selon la norme ASTM D1646.

4. Composition vulcanisable selon une ou plusieurs des revendications 1 à 3, s'agissant, en ce qui concerne les substances mises en oeuvre en tant que composant b), d'un ou de plusieurs acides carboxyliques insaturés et/ou d'un ou de plusieurs de leurs sels, l'acide carboxylique insaturé étant un acide mono- ou dicarboxylique présentant une insaturation éthylénique en position $\alpha,\beta$ et renfermant 3 à 10 atomes de carbone, s'agissant préférentiellement d'acide méthacrylique, d'acide acrylique, d'acide cinnamique, d'acide crotonique ou d'acide itaconique, et les sels étant ceux de sodium, de potassium, de magnésium, de calcium, de zinc, de baryum, d'aluminium, d'étain, de zirconium ou de lithium.

5. Composition vulcanisable selon une ou plusieurs des revendications 1 à 4, s'agissant, en ce qui concerne les substances mises en oeuvre en tant que composant b), d'un ou de plusieurs diacrylates de métaux et/ou diméthacrylates de métaux, préférentiellement de diacrylate de zinc ou de diméthacrylate de zinc.

6. Compositions vulcanisables selon une ou plusieurs des revendications 1 à 5, s'agissant, en ce qui concerne les substances mises en oeuvre en tant que composant c), d'au moins un peroxyde, préférentiellement d'un peroxyde organique, et notamment de peroxyde de dicumyle, de peroxyde de t-butylcumyle, de bis-(t-butyl-peroxyisopropyl) benzène, de peroxyde de di-t-butyle, de 2,5-dihydroperoxyde de 2,5-diméthylhexane, de 3,2,5-dihydroperoxyde de 2,5-diméthylhexyne, de peroxyde de dibenzoyle, de peroxyde de bis-(2,4-dichlorbenzoyl), de perbenzoate de t-butyle, 4,4-di(t-butylperoxy)pentanoate de butyle ou de 1,1-bis(t-butylperoxy)-3,3,5-triméthylcyclohexane.

7. Composition vulcanisable selon une ou plusieurs des revendications 1 à 6, s'agissant, en ce qui concerne les substances mises en oeuvre en tant que composant d), d'au moins un microgel dont la température vitreuse est inférieure à -20 ˚C et qui constitue un homopolymère réticulé ou un copolymère présentant une réticulation statistique.

8. Composition vulcanisable selon une ou plusieurs des revendications 1 à 7, s'agissant, en ce qui concerne les substances mises en oeuvre en tant que composant d), d'au moins un microgel dont la température vitreuse est inférieure à -20 ˚C et dont la proportion insoluble à 23 ˚C dans du toluène ("teneur en gel") représente au moins 70 % en poids, de préférence au moins 80 % en poids et, avec une préférence particulière, au moins 90 % en poids.

9. Composition vulcanisable selon une ou plusieurs des revendications 1 à 8, s'agissant, en ce qui concerne les substances mises en oeuvre en tant que composant d), d'au moins un microgel dont la température vitreuse est inférieure à -20 ˚C et dont l'indice de gonflement ("IG") à 23 ˚C dans du toluène est inférieur à 80, de préférence inférieur à 60 et notamment inférieur à 40, l'indice de gonflement étant calculé à partir du poids du microgel retenant du solvant après une période de gonflement de 24 heures à 23 ˚C dans du toluène (et ayant subi une centrifugation à 20.000 t/min) et du poids du microgel sec selon la formule suivante :

$$IG = poids\ humide\ du\ microgel\ /$$
$$poids\ sec\ du\ microgel.$$

10. Composition vulcanisable selon une ou plusieurs des revendications 1 à 9, s'agissant, en ce qui concerne les substances mises en oeuvre en tant que composant d), d'au moins un microgel dont la température vitreuse est inférieure à -20 ˚C, la température vitreuse $T_g$ étant préférentiellement comprise entre -100 ˚C et -20 ˚C, notamment entre -80 ˚C et -20 ˚C et plus particulièrement entre - 80 ˚C et -50 ˚C.

11. Composition vulcanisable selon une ou plusieurs des revendications 1 à 10, s'agissant, en ce qui concerne les substances mises en oeuvre en tant que composant d), d'au moins un microgel dont la température vitreuse est inférieure à -20 ˚C et qui est choisi dans le groupe constitué de BR (polybutadiène), IR (polyisoprène), SBR (copolymères statistiques de styrène et butadiène dont la teneur en styrène est de 1 à 60, préférentiellement de 5 à 50 % en poids), X-SBR (copolymères statistiques de styrène et de butadiène carboxylés), FKM (caoutchouc fluoré), ABR (copolymères de butadiène, d'acide acrylique et d'ester d'alkyle-$C_{1-4}$), ACM (caoutchouc acrylate), NBR (copolymères de butadiène et d'acrylonitrile dont la teneur en acrylonitrile est de 5 à 60, préférentiellement de 10 à 50 % en poids), X-NBR (caoutchoucs nitriles carboxylés), CR (polychloroprène), IIR (copolymères d'isobutylène et d'isoprène dont la teneur en isoprène est de 0,5 à 10 % en poids), BIIR (copolymères d'isobutylène et d'isoprène bromés dont la teneur en brome est de 0,1 à 10 % en poids), CIIR (copolymères d'isobutylène et d'isoprène chlorés dont la teneur en chlore est de 0,1 à 10 % en poids), HNBR (caoutchoucs nitriles partiellement ou totalement hydrogénés), EPDM (copolymères d'éthylène, de propylène et de diène), EAM (copolymères d'éthylène et d'acrylate), EVM (copolymères d'éthylène et d'acétate de vinyle), CO et ECO (caoutchoucs d'épichlorhydrine), Q (caoutchoucs de silicone), AU (polymerisats de polyester-uréthane), EU (polymerisats de polyéther-uréthane) ENR (caoutchouc naturel époxydé) et de leurs mélanges.

12. Composition vulcanisable selon une ou plusieurs des revendications 1 à 11, contenant

   a) 100 parties en poids d'un ou de plusieurs caoutchoucs nitriles hydrogénés,
   b) 1 à 100 parties en poids, de préférence 5 à 80 parties en poids,
   d'un ou de plusieurs acides mono- ou dicarboxyliques insaturés renfermant 3 à 10 atomes de carbone et/ou un ou plusieurs de leurs sels, s'agissant préférentiellement de diacrylate de zinc ou de méthacrylate de zinc,
   c) 0,2 à 8 parties en poids, de préférence 0,2 à 5 parties en poids
   d'un ou de plusieurs peroxydes, s'agissant préférentiellement de peroxyde de dicumyle, de peroxyde de t-butylcumyle, de bis-(t-butyl-peroxy-isopropyl)benzène, de peroxyde de di-t-butyle, de 2,5-dihydroperoxyde de 2,5-diméthylhexane, de 3,2,5-dihydroperoxyde de 2,5-diméthylhexyne ou de peroxyde de dibenzoyle,
   d) 5 à 60 parties en poids, de préférence 10 à 50 parties en poids
   d'un ou de plusieurs microgel, s'agissant de préférence d'un microgel de type BR ou SBR, dont la température vitreuse $T_g$ est inférieure à -20 ˚C et dont la température vitreuse $T_g$ est préférentiellement inférieure à -50 ˚C, et
   e) 0 à 100 parties en poids, de préférence 5 à 80 parties en poids,
   d'un ou de plusieurs additifs de caoutchouc usuels, s'agissant de préférence d'un ou de plusieurs charges, notamment de noir de carbone, de silice, d'oxyde de zinc, d'oxyde de magnésium ou d'oxyde d'aluminium, d'un ou de plusieurs activateurs de charges, notamment à base d'un silane organique, d'un ou de plusieurs agents antivieillissement, notamment de 2,2,4-triméthyl-1,2-dihydroquinoléine (TMQ) oligomérisée, de diphénylamine (DDA) styrénisée, de diphénylamine octylée (OCD) ou de sel de zinc de 4- et 5-méthylmercaptobenzimidazole (ZMB2) et/ou d'un ou de plusieurs agents de démoulage.

13. Procédé de préparation des compositions vulcanisables selon une ou plusieurs des revendications 1 à 12, **caractérisé en ce que** les composants a, b, c et d sont mélangés les uns avec les autres.

14. Procédé de fabrication de produits vulcanisés, **caractérisé en ce que** la composition vulcanisable selon une ou plusieurs des revendications 1 à 12 est soumise à un traitement thermique.

15. Procédé selon la revendication 14, la composition vulcanisable selon une ou plusieurs des revendications 1 à 12 étant soumise, au sein des matrices, à des températures comprises entre 120 et 200 ˚C, de préférence entre 140 et 180 ˚C.

16. Utilisation de la composition vulcanisable selon une ou plusieurs des revendications 1 à 12 pour fabriquer des produits vulcanisés.

17. Utilisation de la composition vulcanisable selon une ou plusieurs des revendications 1 à 12 pour fabriquer des courroies, des revêtements de rouleaux, des joints, des tuyaux ou des câbles.

18. Produits vulcanisés pouvant être obtenus par vulcanisation de la composition vulcanisable selon une ou plusieurs des revendications 1 à 12.

19. Courroie contenant le produit vulcanisé selon la revendication 18.

20. Revêtement de rouleaux contenant le produit vulcanisé selon la revendication 18.

21. Tuyaux contenant le produit vulcanisé selon la revendication 18.

22. Câbles contenant le produit vulcanisé selon la revendication 18.

# EP 1 801 125 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2913992 A
- EP 0265706 A
- EP 0112109 A
- DE 3438414 A
- EP 0383127 A
- US 5391627 A
- US 5208294 A
- EP 0405216 A
- DE 4220563 A
- GB 1078400 A
- DE 19701487 A
- DE 19701489 A
- DE 19701488 A
- DE 19834804 A
- DE 19834803 A
- DE 19834802 A
- EP 1063259 A
- DE 19939865 A
- DE 19942620 A
- DE 19942614 A
- DE 10021070 A
- DE 10038488 A
- DE 10039749 A
- DE 10052287 A
- DE 10056311 A
- DE 10061174 A
- US 3700637 A
- DE 2539132 A
- EP 134023 A
- DE 3541689 A
- DE 3540918 A
- EP 298386 A
- DE 3529252 A
- DE 3433392 A
- US 4464515 A
- US 4503196 A
- EP 0471250 A
- US 4631315 A
- US 6683136 A
- EP 0854171 A
- EP 405216 A
- US 5302696 A
- US 5442009 A
- US 2187146 A
- US 4826721 A
- US 4715607 A
- US 5100945 A
- US 6399706 A

### In der Beschreibung aufgeführte Nicht-Patentliteratur

- **HOUBEN-WEYL.** Methoden der Organischen Chemie. Georg Thieme Verlag, 1961, vol. 14/1
- **VOLLMERT.** Polymer Chemistry. Springer, 1973
- **HOUBEN-WEYL.** Methoden der organischen Chemie. vol. 14/2, 848
- Makromoleküle. **H.G. ELIAS.** Technologie. 1992, vol. 2, 99 ff
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250
- **KLEEMANN ; WEBER.** Formeln und Tabellen für die Elastomerverarbeitung. Dr. Gupta Verlag, 1994